(19) Europäisches Patentamt / European Patent Office / Office européen des brevets

(11) **EP 1 540 036 B1**

(12) **EUROPEAN PATENT SPECIFICATION**

| | |
|---|---|
| (45) Date of publication and mention<br>of the grant of the patent:<br>**02.08.2017 Bulletin 2017/31** | (51) Int Cl.:<br>**C25B 1/26** *(2006.01)*     **C01B 11/14** *(2006.01)* |
| (21) Application number: **02773418.5** | (86) International application number:<br>**PCT/US2002/029418** |
| (22) Date of filing: **17.09.2002** | (87) International publication number:<br>**WO 2004/027117 (01.04.2004 Gazette 2004/14)** |

(54) **ELECTROCATALYTIC PROCESS AND APPARATUS**

ELEKTROKATALYTISCHES VERFAHREN UND ELEKTROKATALYTISCHE VORRICHTUNG

PROCESSUS ET APPAREIL ELECTROCATALYTIQUES

| | |
|---|---|
| (84) Designated Contracting States:<br>**DE ES FR GB IE IT** | (74) Representative: **Godemeyer Blum Lenze<br>Patentanwälte<br>Partnerschaft mbB - werkpatent<br>An den Gärten 7<br>51491 Overath (DE)** |
| (43) Date of publication of application:<br>**15.06.2005 Bulletin 2005/24** | |
| (73) Proprietor: **Ecolab USA Inc.<br>St. Paul, MN 55102 (US)** | (56) References cited:<br>**US-A- 5 008 096**    **US-A- 5 106 465**<br>**US-A- 5 296 108**    **US-B1- 6 203 688** |
| (72) Inventor: **DIMASCIO, Felice<br>Rocky Hill, CT 06067 (US)** | |

**Description**

BACKGROUND OF THE INVENTION

This disclosure relates to an electrochemical method and apparatus, more particularly, relates to a catalytic process and even more particularly, relates to an improved system and process for producing halogen oxides.

With the decline of gaseous chlorine as a microbiocide and bleaching agent, various alternatives have been explored, including bleach, bleach with bromide, bromo-chlorodimethyl hydantoin, ozone, and chlorine dioxide ($ClO_2$). Of these, chlorine dioxide has generated a great deal of interest for control of microbiological growth in a number of different industries, including the dairy industry, the food and beverage industry, the pulp and paper industries, the fruit and vegetable processing industries, various canning plants, the poultry industry, the beef processing industry and miscellaneous other food processing applications. Chlorine dioxide is also seeing increased use in municipal potable water treatment facilities, potable water pathogen control in office building and healthcare facilities, industrial cooling loops, and in industrial waste treatment facilities, because of its selectivity towards specific environmentally-objectionable waste materials, including phenols, sulfides, cyanides, thiosulfates, and mercaptans. In addition, chlorine dioxide is being used in the oil and gas industry for downhole applications as a well stimulation enhancement additive.

Unlike chlorine, chlorine dioxide remains a gas when dissolved in aqueous solutions and does not ionize to form weak acids. This property is at least partly responsible for the biocidal effectiveness of chlorine dioxide over a wide pH range, and makes it a logical choice for systems that operate at alkaline pHs or that have poor pH control. Moreover, chlorine dioxide is a highly effective microbiocide at concentrations as low as 0.1 parts per million (ppm) over a wide pH range.

The biocidal activity of chlorine dioxide is believed to be due to its ability to penetrate bacterial cell walls and react with essential amino acids within the cell cytoplasm to disrupt cell metabolism. This mechanism is more efficient than other oxidizers that "burn" on contact and is highly effective against legionella, algae and amoebal cysts, giardia cysts, coliforms, salmonella, shigella, and cryptosporidium.

Unfortunately, chlorine dioxide can become unstable and hazardous under certain temperature and pressure conditions. Although this is only an issue of concern for solutions of relatively high concentration, its shipment, at any concentration, is banned. It is for this reason that chlorine dioxide is always generated on-site, at the point of use, usually from a metal chlorate or metal chlorite as an aqueous solution. For example, a metal chlorite solution mixed with a strong acid can be used to generate chlorine dioxide in situ.

Electrochemical processes provide a means for generating chlorine dioxide for point of use applications. For example, U.S. Patent No. 5,419,816 to Sampson et al. describes a packed bed ion exchange electrolytic system and process for oxidizing species in dilute aqueous solutions bypassing the species through an electrolytic reactor packed with a monobed of modified cation exchange material. A similar electrolytic process is described in U.S. Patent No. 5,609,742 to Sampson et al. for reducing species using a monobed of modified anion exchange.

One difficulty with electrochemical processes is that it can be difficult to control the generation of undesirable species. For example, there are many electrochemical reactions that can occur at the anode. Within a potential range of 0.90 to 2.10 volts, at least eight different reactions are thermodynamically possible, producing products such as chlorate ($ClO_3^-$), perchlorate ($ClO_4^-$), chlorous acid ($HClO_2$ oxygen ($O_2$), hydrogen peroxide ($H_2O_2$) and ozone ($O_3$). It is highly desirable and a significant commercial advantage for an apparatus to allow for careful control of the products generated to achieve high yield efficiency.

Chlorine dioxide has also been produced from a chlorine dioxide precursor solution by contacting the precursor solution with a catalyst (e.g., catalysts containing a metal such as those catalysts described for example in U.S. Patent No. 5,008,096) in the absence of an electrical field or electrochemical cell. However, known catalytic processes have the disadvantage of becoming greatly deactivated within a matter of days. Moreover, it has been found that the support materials for the catalytic sites tend to quickly degrade due to the oxidizing nature of chlorine dioxide. Still further, the use of catalyst materials in packed columns or beds for generating chlorine dioxide has been found to cause a significant pressure drop across the column or form channels within the column that results in a significant decrease in conversion efficiency from the chlorine dioxide precursor to chlorine dioxide. It is also noted that catalyst materials are relatively expensive and can add significant cost to an apparatus employing these materials.

US-A-5 106 465 discloses a process and device for electrolytically producing an aqueous solution of chlorine dioxide in an electrolytic cell having an anode compartment, a cathode compartment and a central compartment positioned between the anode and cathode compartments, wherein the central compartment comprises a cation exchange material and is separated from the cathode compartment with a membrane. An aqueous chlorite feed is fed to the central compartment of the electrolytic reactor.

US-A-5 008 096 discloses a method for enhancing generation of chlorine dioxide from an aqueous medium containing a chlorine dioxide precursor which comprises contacting the aqueous medium with a catalytic amount of a catalyst selected from the group consisting of a transition metal, a transition metal oxide and mixtures thereof for a period of time effective to generate chlorine dioxide. The transition metals and transition metal oxides which may be employed as the catalyst to enhance the generation of chlorine dioxide are the transition metals of Group 58, 6B, 7B and 8 of the Periodic Table of Elements.

The present invention is directed to a process for producing chlorine dioxide from an alkali metal chloride solution according to claim 1. The process comprises applying a current to an electrolytic reactor, wherein the electrolytic reactor includes an anode compartment comprising an anode, a cathode compartment comprising a cathode, and a central compartment positioned between the anode and cathode compartments, wherein the central compartment comprises a cation exchange material and is separated from the cathode compartment with a cation exchange membrane; flowing water into the anode and cathode compartments ; feeding an alkali metal chloride solution to the central compartment; exchanging the alkali metal ions with hydrogen ions to produce a
hydrogen chloride effluent in the central compartment; diluting an alkali metal chlorite solution with the hydrogen chloride effluent ; feeding the diluted alkali metal chlorite and hydrogen chloride solution to a catalytic reactor; and contacting the diluted alkali metal chlorite and hydrogen chloride solution with the catalytic material in the catalytic reactor to produce chlorine dioxide.

The above-described process and other features will become better understood from the detailed description that is described in conjunction with the accompanying drawings.

BRIEF DESCRIPTION OF THE DRAWINGS

Referring now to the figures wherein the like elements are numbered alike:

Figure 1 shows a cross sectional view illustrating a system comprising an electrolytic reactor and a catalytic reactor;
Figure 2 shows a cross sectional view illustrating the a single compartment electrolytic reactor;
Figure 3 shows a cross sectional view illustrating a two-compartment electrolytic reactor;
Figure 4 shows a cross sectional view illustrating an multi-compartment electrolytic reactor;
Figures 5A and 5B show an exploded isometric view of an electrolytic reactor cassette employing the multi-compartment reactor of Figure 4;
Figure 6 shows a cross sectional view of a catalytic reactor;
Figure 7 schematically illustrates a system and process for generating chlorine dioxide from an alkali metal chlorite solution;
Figure 8 schematically illustrates a system and process for generating chlorine dioxide from an alkali metal chloride solution; and
Figure 9 is a graph showing chlorine dioxide conversion efficiency from an alkali metal chlorite feed solution in the system as shown in Figure 1 employing a platinum oxide catalyst material in the catalytic reactor.

DETAILED DESCRIPTION OF THE PREFERRED EMBODIMENTS

A system and process for producing halogen oxide from alkali metal halite solutions are disclosed, such as, for example, producing chlorine dioxide from an alkali metal chlorite solution. The system and process generally include employing an electrolytic reactor for producing an aqueous effluent containing halous acid (or hydrogen halide), which is then fed to a catalytic reactor containing a catalytic material for converting the halous acid to halogen oxide (or combined with an alkali metal chlorite solution and then fed to the catalytic reactor to produce halogen oxide). In a preferred embodiment, the alkali metal halite is an alkali metal chlorite and is employed for producing chlorine dioxide.

In a more preferred embodiment, the alkali metal chlorite solutions are dilute solutions. The term "dilute" refers to aqueous alkali metal chlorite solutions containing less than about 10,000 milligrams alkali metal chlorite per liter of solution (mg/L), preferably less than about 5,000 mg/L, and more preferably less than about 1,500 mg/L. For industrial use, the alkali metal chlorite solution is preferably in the form of a 25% aqueous solution in view of handling property, safety and the like, which can be further diluted during use. Suitable alkali metals include sodium, potassium, lithium, and the like, with preference given to sodium salt considering the commercial availability.

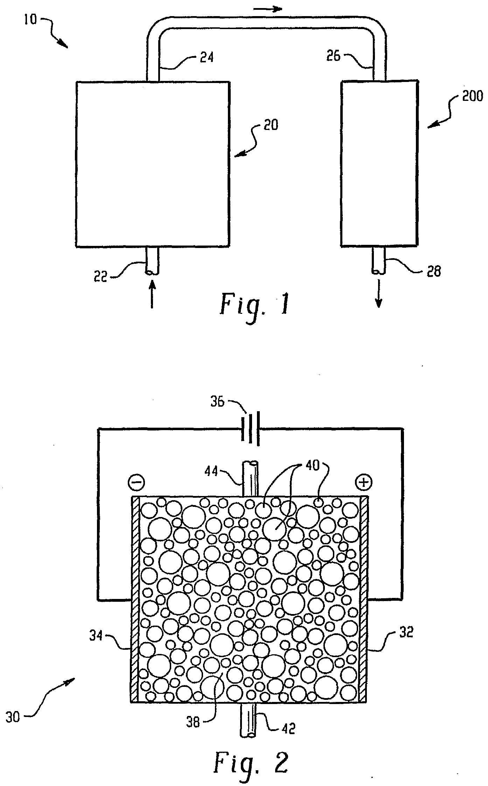

Referring now to Figure 1, wherein like elements are numbered alike, there is shown a cross-sectional view illustrating a system 10 that generally comprises an electrolytic reactor 20 including an inlet 22 and an outlet 24, wherein the outlet 24 is in fluid communication with an inlet 26 of a catalytic reactor 200. As will be discussed in greater detail, the system 10 can be utilized for continuously generating an aqueous effluent containing halogen oxide dioxide from an outlet 28 of the catalytic reactor 200. For example, an alkali metal chlorite solution can be fed into the inlet 22 of the electrolytic reactor 20 to generate an aqueous effluent containing chlorous acid. The chlorous acid effluent is then fed to inlet 26 of the catalytic reactor 200, wherein the chlorous acid is reacted to form chlorine dioxide. In this manner, it has been found that high conversion efficiencies of chlorite ions to chlorine dioxide as well as continuous production can be achieved. Alternatively, a halogen oxide, preferably chlorine dioxide, can be produced by feeding an acid precursor solution into the electrolytic reactor 20 to produce a protic acid effluent, which is then combined with an alkali metal halite solution and fed to the catalytic reactor 200 to produce the halogen oxide. For example, a sodium chloride solution can be fed to the electrolytic reactor 20 to produce a hydrogen chloride effluent. The hydrogen chloride effluent can then be combined with an alkali metal chlorite solution and subsequently fed to the catalytic reactor 200 to produce the chlorine dioxide effluent. Suitable acid precursor solutions include alkali metal sulfates, sulfites, sulfides, nitrates, nitrites, phosphates, phosphates, halides, and the like.

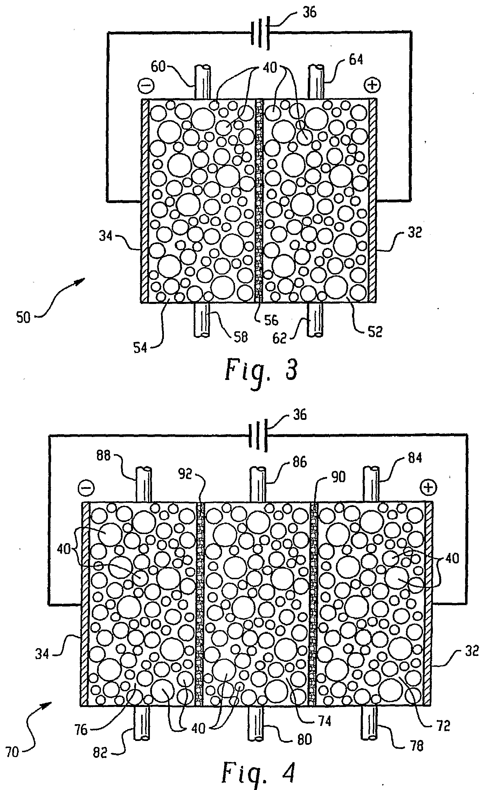

Suitable electrolytic reactors 20 for use in system 10 include a single compartment reactor 30 as shown in Figure 2, a two-compartment reactor 50 as shown in Figure 3, or a multi-compartment reactor, i.e., a reactor containing three or more compartments. An exemplary multi-compartment electrolytic reactor 70 configured with three compartments is shown in Figure 4.

Referring now to Figure 2, the single compartment electrolytic reactor 30 includes an anode 32 and a cathode 34 in electrical communication with a source of direct current 36 (DC). Interposed between the anode 32 and the cathode 34 exists at least one compartment 38 containing particulate material 40. Compartment 38 further includes an inlet 42 for introducing an alkali metal chlorite feed solution to the electrolytic reactor 30 and an outlet 44 for discharging an effluent from the electrolytic reactor 30.

As used herein, the term "particulate material" refers to a cation exchange material and/or an anion exchange material. Any cation exchange material can be used provided portions of its active sites are occupied with hydrogen, i.e., cation exchange material in the hydrogen form. In a preferred embodiment, the particulate material 40 in compartment 38 includes the cation exchange material or a mixture of the cation exchange material and the anion exchange material. In the case of mixtures of the cation and anion exchange materials, the majority of the particulate material 40 within compartment 38 is preferably the cation exchange material. The particulate material 40 may also include an additive or additives to achieve certain results. For example, electrically conductive particles, such as carbon and the like, can be used to affect the transfer of DC current across the electrodes. However, some additives, such as carbon, are prone to disintegration in acidic environments, thus requiring careful selection.

As shown in Figure 3, the two-compartment electrolytic reactor 50 includes an anode 32, an anode compartment 52, a cathode 34, and a cathode compartment 54, wherein the anode 32 and cathode 34 are in electrical communication with a source of direct current 36 (DC). A membrane 56 preferably separates the anode compartment 52 from the cathode compartment 54. The anode compartment 52 further includes inlet 58 and outlet 60. Similarly, the cathode compartment 54 includes inlet 62 and outlet 64.

As used herein, the term "membrane" generally refers to a sheet for separating adjacent compartments, e.g., compartments 52 and 54. In this regard, the term "membrane" can be used interchangeably with screen, diaphragm, partition, barrier, a sheet, a foam, a sponge-like structure, a canvas, and the like. The membrane 56 can be chosen to be permselective, e.g., a cation exchange membrane, or can be chosen to be non-permselective, e.g., a porous membrane. As used herein, the term "permselective" refers to a selective permeation of commonly charged ionic species through the membrane with respect to other diffusing or migrating ionic species having a different charge in a mixture. In contrast, the term "non-permselective" generally refers to a porous structure that does not discriminate among differently charged ionic species as the species pass through the porous structure, i.e., the membrane is non-selective with respect to ionic species. For example, in a permselective membrane such as a cation exchange membrane, cations can freely pass through the membrane whereas the passage of anions is prevented. In contrast, in a non-permselective membrane such as a porous membrane, both anions and cations can freely pass through the porous membrane.

At least one of the compartments 52 or 54 of electrolytic reactor 50, contains the particulate material 40, and is configured to receive an aqueous alkali metal chlorite feed solution (or alkali metal halide solution). If both compartments contain particulate material 40, each compartment 52, 54 may be configured to possess its own physical properties (e.g., the particulate material 40 in the cathode compartment 54 may have different properties from the particulate material 40 disposed in the anode compartment 52) through which an aqueous solution can pass without entering adjacent compartment 52. Preferably, the particulate material 40 in the compartment 52 and/or 54 in which the alkali metal halite feed solution or the alkali metal halide solution is fed comprises the cation exchange material in the hydrogen form or a mixture of cation exchange material and anion exchange material, wherein the majority of the particulate material 40 is the cation exchange material in the hydrogen form.

In a preferred embodiment, the anode and cathode compartments 52, 54, respectively, are preferably packed with the cation exchange material, and the membrane 56 separating the anode compartment 52 from the cathode compartment 54 is a cation exchange membrane. In this configuration of the two-compartment reactor 50, the alkali metal chlorite feed solution (or alkali metal halide solution) can be fed to either or both compartments to provide an effluent containing chlorous acid (or hydrogen halide solution), which is then fed to the catalytic reactor 200.

Referring now to Figure 4, the three-compartment electrolytic reactor 70 generally comprises an anode compartment 72, a central compartment 74, and a cathode compartment 76. The central compartment 74 is interposed between the anode and cathode compartments 72, 76, respectively, and is separated therefrom by membranes 90 and 92. Each compartment 72, 74, and 76, preferably includes inlets 78, 80, 82, respectively, and outlets 82, 84 and 86, respectively. The anode compartment 72 includes anode 32 and can be optionally filled with the particulate material 40. The cathode compartment 76 includes cathode 34 and can be optionally filled with the particulate material 40. The anode 32 and cathode 34 are in electrical communication with a source of direct current 36 (DC).

In a preferred embodiment, the central compartment 74 comprises particulate material 40, wherein the particulate material 40 comprises the cation exchange material or a mixture of cation exchange material and anion exchange material, wherein the majority of the particulate material 40 is the cation exchange material in the hydrogen form. In addition, the electrolytic reactor membrane 90 is a cation exchange membrane.

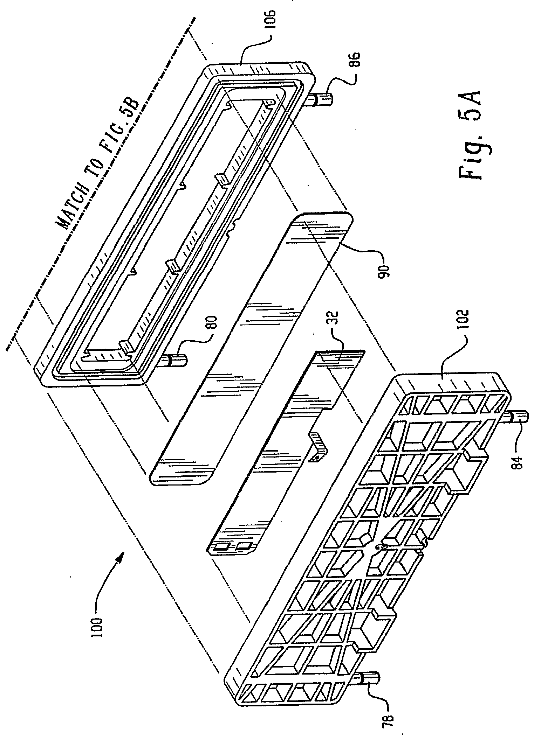

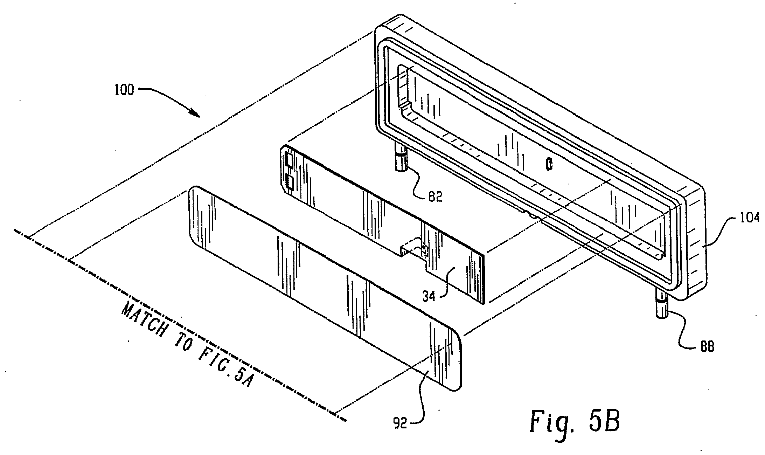

Referring now to Figures 5A and 5B, there is shown an exploded isometric view of an exemplary electrolytic reactor cassette 100 employing the three-compartment reactor configuration 70 as described in relation to Figure 4. The cassette 100 is formed from stock materials that are preferably chemically inert and non-conductive. Components forming the cassette 100 may be molded for high volume production or alternatively, may be machined as described in further detail below.

The exemplary cassette 100 is configured for producing about 5 grams per hour of chlorous acid and is fabricated from two pieces of flat stock 102 and 104, about 4 inches across by about 14 inches long by about 1 inch thick. The pieces 102, 104 are machined such that depressions 1/4 inch deep by 2 inches across by 12 inches long are cut in the center of each piece. The pieces 102, 104 are then drilled and tapped to accept the anode 32 and cathode 34. Each piece further includes inlets 78, 82 and outlets 84, 88, through which fluid would flow. The anode 32 and cathode 34 are approximately 2 inches across by 9 inches long and are inserted into the stock pieces 102 and 104. Membranes 90, 92 are disposed over each depression formed in stock pieces 102, 104. Preferably, membrane 90 is a cation exchange membrane. Approximately 100 ml of particulate material (not shown) may optionally be packed into each depression to form the anode compartment 72 and the cathode compartment 76, respectively (as shown in Figure 4). As constructed, the particulate material, if present in the cathode and/or anode compartments, is configured to be in direct contact with the anode 32 or cathode 34.

Interposed between the membranes 90, 92 is a piece of flat stock 106, about 4 inches across by about 14 inches long by 1 inch thick. The stock piece 106 is machined such that a hole about 2 inches across by 12 inches long is cut through the piece to form the central compartment 74 (as shown in Figure 4). The piece 106 is then drilled and tapped to accept two fittings that form inlet 80 and outlet 86 through which fluid would flow. The central compartment 74 is filled with about 150 ml of particulate material that includes the cation exchange material. The components of the electrolytic reactor cassette 100 are assembled and bolted together, or otherwise secured. In this configuration, the dilute aqueous alkali metal halite solution or alkali metal halide solution is preferably passed through the central compartment 74 and is not in direct contact with the anode 32 or cathode 34.

In a preferred embodiment, the cassette 100 is formed from an acrylonitrile-butadiene-styrene (ABS) terpolymer. Other suitable materials include, but are not intended to be limited to, polyvinylchloride (PVC), chlorinated PVC, polyvinylidene difluoride, polytetrafluoroethylene and other fluoropolymer materials.

While the arrangements of the electrolytic reactors 30, 50, and 70 illustrated in Figures 2, 3, and 4 are presently considered preferable, any arrangement in which a sufficient quantity of cation exchange resin or material is packed between the anode and cathode in an electrolytic reactor or in at least one of the compartments of a divided or multi-compartment electrolytic reactor can be used. Other embodiments include, but are not limited to, separation of the anode and cathode compartments to control intermixing of gases and solutions and provision of any number of packed-bed compartments separated by membranes placed between the anode and cathode to affect other oxidation, reduction or displacement reactions.

The anode 32 and the cathode 34 may be made of any suitable material based primarily on the intended use of the electrolytic reactor, costs, and chemical stability. For example, the anode 32 may be made of a conductive material, such as ruthenium, iridium, titanium, platinum, vanadium, tungsten, tantalum, oxides of at least one of the foregoing, combinations including at least one of the foregoing, and the like. Preferably, the anode 32 comprises a metal oxide catalyst material disposed on a suitable support. The supports are typically in the form of a sheet, screen, or the like and are formed from a rigid material such as titanium, niobium, and the like. The cathode 34 may be made from stainless steel, steel or may be made from the same material as the anode 32.

The permselective membranes, e.g., 56, 90, and 92, preferably contain acidic groups so that ions with a positive charge can be attracted and selectively passed through the membrane in preference to anions. Preferably, the permselective membranes contain strongly acidic groups, such as $R\text{-}SO_3^-$ and are resistant to oxidation and temperature effects. In a preferred embodiment, the permselective membranes are fluoropolymers that are substantially chemically inert to halous acid (e.g., chlorous acid), hydrogen halides (e.g., hydrogen chloride) and the materials or environment used to produce the halogen dioxide (e.g., chlorine dioxide). Examples of suitable permselective membranes include perfluorosulfonate cation exchange membranes commercially available under the trade name NAFION commercially available from E.I. duPont de Nemours, Wilmington, DE.

The cation exchange material is preferably an oxidizing exchanger, i.e., a cation ion exchange resin or material. During operation of the electrolytic reactor 20, it is hypothesized that the function of the cation exchange material includes, among others, electro-actively exchanging or adsorbing alkali metal ions from the aqueous alkali metal halite solution (or alkali metal halide solution) and releasing hydrogen ions. The released hydrogen ions react with the halite ions to form halous acid (or react with halide ions to form hydrogen halide) and/or can regenerate the cation exchange material back to the hydrogen form thereby releasing alkali metal ions or the like that may then pass into the cathode compartment, if present. The use of the cation exchange material is especially useful when feeding a dilute alkali metal halite solution into the central compartment 74 of the three-compartment electrolytic reactor 70 as it helps lower the voltage within the compartment and increases conversion efficiency. When the cation exchange material reaches its exhaustion point or is near exhaustion, it may be readily regenerated by a strong or weak acid so as to exchange the alkali or alkaline earth metal previously adsorbed by the active sites of the cation exchange material for hydrogen. The acid necessary for regenerating the cation exchange material may be added individually at the compartment inlet or may be generated in the anode compartment, which then diffuses across the cation exchange membrane. The anionic exchange material, if present, may be regenerated by a strong or weak base, e.g., sodium or potassium hydroxide.

Examples of suitable cation exchange resins or materials include, but are not intended to be limited to, polystyrene divinylbenzene cross-linked cation exchangers (e.g., strong acid types, weak acid types, iminodiacetic acid types, chelating selective cation exchangers and the like); strong acid perfluorosulfonated cation exchangers; naturally occurring cation exchangers, such as manganese greensand; high surface area macro-reticular or microporous type ion exchange resins having sufficient ion conductivity, and the like. For example, strong acid type exchange materials suitable for use are commercially available from Mitsubishi Chemical Corporation under the trade names Diaion SK116 and Diaion SK104. Optionally, the cation exchange material may be further modified, wherein a portion of the ionic sites are converted to semiconductor junctions, such as described in U.S. Patent Nos. 6,024,850, 5,419,816, 5,705,050 and 5,609,742, herein incorporated by reference in their entireties. However, the use of modified cation exchange material is less preferred because of the inherent costs associated in producing the modification. In a preferred embodiment, the cation exchange materials have a cross-linking density greater than about 8 %, with greater than about 12 % more preferred and with greater than about 16 % even more preferred. Increasing the cross-linking density of the cation exchange materials has been found to increase the resistance of the cation exchange materials to potentially deleterious effects of the electrolytic environment such as oxidation and degradation. As a result, operating lifetimes for the electrolytic reactor can advantageously be extended.

The packing density and conductivity of the particulate material 40 disposed within a compartment can be adjusted depending on the operating parameters and desired performance for the electrolytic reactors 30, 50, 70. For example, the particulate material may be shrunk before use in the electrolytic reactor, such as by dehydration or electrolyte adsorption. Dehydration may be by any method in which moisture is removed from the ion exchange material, for example, by vacuum drying or by using a drying oven. It has been found that dehydration prior to packing can increase the packing density by as much as 40 %. Electrolyte adsorption involves soaking the material in a salt solution, such as sodium chloride. The packing density of the material so treated can be increased by as much as 20 %. The increase in packing density advantageously increases the volume in which the DC current travels, thus reducing the electrical resistance in the electrolytic reactor.

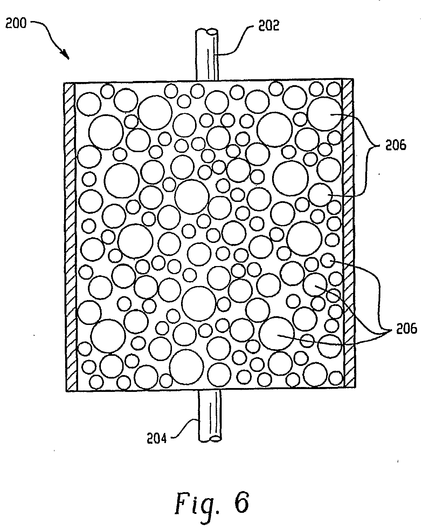

As shown in Figure 6, the catalytic reactor 200 has an inlet 202 and an outlet 204. Disposed within the catalytic reactor 200 is a bed containing a catalytic material 206. As used herein, the term "catalyst material" refers to a support and an active metal catalyst. Preferably, the active metal catalyst is finely and discretely deposited onto the support. While not wanting to be bound by theory, it is believed that the active metal catalyst adsorbs hydrogen atoms without reacting with the hydrogen atoms, which form stable hydrides. Preferably, the active metal catalyst does not adsorb hydrogen atoms into its crystal lattice since this will decrease its catalytic activity. In a preferred embodiment, the active metal catalyst is a noble metal. While not wanting to be bound by theory, it is believed that the catalytic activity of the active metal is associated with crystal imperfections and the finely divided deposits help to increase the surface area as well as increase the number of active catalytic sites. Suitable active metal catalysts include, but are not limited to, ruthenium, platinum, palladium, osmium, iridium, rhodium, titanium, manganese, lead, zirconium, niobium, tantalum, tungsten, tin, and composites or mixtures or alloys or oxides of at least one of the foregoing metal catalysts. Preferably, the active metal catalyst is an oxide of a metal selected from the group consisting of ruthenium, platinum, palladium, osmium, iridium, and rhodium. More preferably, the active metal catalyst is a platinum oxide.

In another embodiment, the active metal catalyst is a combination of an oxide of ruthenium, platinum, palladium, osmium, iridium, rhodium or mixtures or alloys of at least one of the foregoing metals and a less active oxide of a metal including titanium, lead, manganese, zirconium, niobium, tantalum, tungsten, tin, or mixtures, or alloys of at least one of the foregoing metals. Preferably, the molar ratio of the active metal catalyst to the less active metal catalyst is of about 0.3 : 1 to about 100 : 1. More preferably, the molar ratio of the active metal catalyst to the less active metal catalyst is about 10 : 1.

Preparation of the catalyst material generally includes contacting the support with a catalyst precursor to form the active metal catalyst sites, for example, a catalyst precursor salt. In one embodiment, a metal oxide precursor salt is dissolved in an aqueous solution including an alcohol, and the solution is coated onto the support. Suitable alcohols include methanol, ethanol, isopropanol, propanol, butanol, combinations including at least one of the foregoing alcohols, and the like. In a preferred embodiment, the metal oxide precursor salt is dissolved in isopropanol and deionized water solution. The amount of alcohol used in the solution is dependent on the solubility of the metal oxide precursor salt, wherein the volume fraction of alcohol in an aqueous solution is about 30 to about 90 % (v/v), with about 40 to about 80 % (v/v) preferred and with about 50 to about 60 % (v/v) more preferred.

Depending on the desired properties, a solution of the metal oxide precursor salt may contain further additives, for example, ions that increase the solubility of the metal oxide precursor. Suitable ions include hydroxides, chlorides, phosphates, sulfates, ammonium, potassium, sodium, lithium or the like. Preferably, the additive is ammonium hydroxide. The weight fraction of additive in the solution is about 0.1 to about 10 % (w/v), with about 0.5 to about 5 % (w/v) preferred, and with about 1 % (w/v) more preferred.

Alternatively, the metal catalyst may be deposited onto the support material using other techniques such as impregnation, co-precipitation, ion exchange, dipping, spray coating, vacuum deposition, sputtering, or the like. Preferably, the amount of metal catalyst deposited onto the support is about 0.01 to about 100 weight %, with about 0.01 to about 10 weight % more preferred, and with about 0.05 to about 2 weight % most preferred, based on the total weight of the catalyst material. In addition, it has been found that the catalyst activity of the catalyst material is improved with multiple depositions, i.e., the metal oxide precursor solution is applied by several individual depositions. Preferably, the number of depositions is about 2 to about 12, with the number of depositions of about 2 to about 3 more preferred.

The metal deposited onto the support by the precursor solution is then thermally or chemically oxidized to the oxide form. When utilizing a thermal process, adjusting the temperature can control the extent of oxidation. The support is preferably thermally stable to the oxidation temperatures employed. The oxidation temperatures are preferably about 200°C to about 1000°C, with about 400°C to about 800°C more preferred, and with about 500°C to about 700°C even more preferred. Suitable chemical oxidants include permanganate. The extent of oxidation may be increased when a multiple deposition process is used in contrast to a single deposition process.

The catalyst material can be periodically regenerated by removing the catalyst material from the reactor 200 and thermally treating the catalyst material 206. For example, a catalyst material comprising a ceramic support and platinum catalyst material can be regenerated by heating the material to about 550°C for about 20 minutes, cooling to about room temperature, backwashing with water, mixing with a tetramineplatinum (II) chloride solution, air drying, heating again to about 550°C for about 20 minutes, backwashing and air drying. Alternatively, the media may be regenerated by chemically treating the media.

Suitable supports for the catalyst material include metals, zeolites, anthracite, glauconite, faujasite, mordenite, clinoptilolite, aluminas, silicas, clays, ceramics, carbon and the like. Of these supports, ceramics are most preferred. In a preferred embodiment, the catalyst materials are made from those ceramics described in U.S. Patents 4,725,390 and 4,632,876, herein incorporated by reference in their entireties. Preferred ceramics are those made essentially from nonmetallic minerals (such as mineral clays) by firing at an elevated temperature. More preferred are ceramic materials commercially available under the trade name MACROLITE® by the Kinetico Company. The MACROLITE® ceramic materials are spherically shaped and characterized by having a rough texture, high surface area, and level of moisture absorption of less than about 0.5%. The low level of moisture absorption allows for the metal oxide precursor solution to penetrate a minimal depth into the surface of the ceramic, thereby depositing metal onto the external surface of the support, an optimum location for subsequent contact with an aqueous solution. The surface area of the MACROLITE® ceramic materials is believed to be on the order of about 103 $m^2$ per gram.

The process for making ceramic support materials, such as the MACROLITE® material, generally includes the following steps. In the first step, mineral particulate, binder, silicon carbide, and parting agent are mixed and spheroidized in order to form unfired spheroids. One example of mineral particulates contains: 60% orthoclase, 10% nepheline, 10% hornblende, 5% diopside, 15% accessory minerals (titanite, apatite, magnetite and biotite) and trace amounts of secondary minerals (e.g., kaolinite and analcite). Another example contains approximately 75% plagioclase and orthoclase feldspar and 25% of the minerals pyroxene, hornblende, magnetite and quartz of which magnetite is less than 5%. Byproduct mineral fines of perlite (containing 2-5% chemically bound water) will also function as the mineral particulates. Minerals containing chemically bound water or sulfur, which are useful components of the mineral particulates, are hornblende, apatite, biotite, pyrite, vermiculite and perlite.

Binders that may be useful as raw materials include bentonite, starch, polyvinyl alcohol, cellulose gum, polyvinyl acetate and sodium lignosulphonate. The amount of binder may generally comprise about 1 to about 5% by weight of the dry materials fed to the mixer and is generally sufficient to permit screening and handling of the spheroids without significant attrition or breakage.

Suitable parting agents include magnesium oxide, zircon, diaspore and high alumina clays as well as other surface metal oxides.

The spheroids are then dried at a temperature of about 40°C to about 200°C and typically screened. The ceramic spheroids are then over-fired in a kiln, which allows for the formation of the internal air cells, making the finished product less dense. The firing atmosphere is typically air. The silicon carbide in the spheroids is oxidized during firing, the SiC near the surface being more extensively oxidized than that in the core.

The product from the kiln is screened using standard methods known to those skilled in the art. Either before, during or after the screening step, the fired spheroids may be subjected to vigorous agitation by air or some other agitation means or to a water-washing step in order to remove dust from their surfaces. The support material is then coated with an active metal catalyst in the manner previously described and then thermally or chemically oxidized to the oxide form.

The size of the particulate material is generally defined by a mesh size of a sieve in which the particles are screened. For example, a 30 mesh sieve will allow particles less than about 600 micrometers to pass through the sieve, whereas particles about 600 micrometers or larger than will not pass through. Generally, sieves of varying mesh ratings are stacked and particles are separated using methods well known to those skilled in the art. The range of particles separated is defined by the mesh size of the sieves used. For example, a mesh size designation of 20/40 means that substantially all particles have a size ranging from 20 to 40 mesh (about 841 to about 420 micrometers in diameter). A 30/50 designation indicates that substantially all particles have a size ranging from 30 to 50 mesh (about 595 to about 297 micrometers in diameter). The sizes of the particulate matter are preferably smaller than 7 mesh (about 2800 micrometers in diameter), with smaller than 14 mesh (about 1400 micrometers in diameter) more preferred, and with smaller than 30 mesh (about 595 micrometers in diameter) even more preferred. Also preferred are particulate sizes greater than 60 mesh (about 250 micrometers in diameter), with greater than 50 mesh (about 297 micrometers in diameter) more preferred, and greater than 40 mesh (about 425 micrometers) even more preferred.

The flow rate through the catalytic reactor is preferably about 1 to about 10 gallons per minute/square foot (gpm/ft$^2$), with about 2 to about 5 gpm/ft$^2$ more preferred. The minimum bed depth is preferably about 24 inches. The flow rate and minimum bed depth can be used to determine the dimension of the catalytic reactor and the volume of catalytic material employed.

The particulate material 40 of the electrolytic reactor 20 and the catalytic material 206 of the catalytic reactor 200 are not intended to be limited to any particular shape. Suitable shapes include rods, extrudates, tablets, pills, irregular shaped particles, spheres, spheroids, capsules, discs, pellets or the like. In a preferred embodiment, the particulate material is spherical. More preferably, the particulate material includes a reticulated and textured surface having an increased surface area. The sizes of the particulate material 40 and catalytic materials 206 employed in system 10 are dependent on the acceptable pressure drop across the respective bed. The smaller the particulate material 40 or catalytic material 206, the greater the pressure drop.

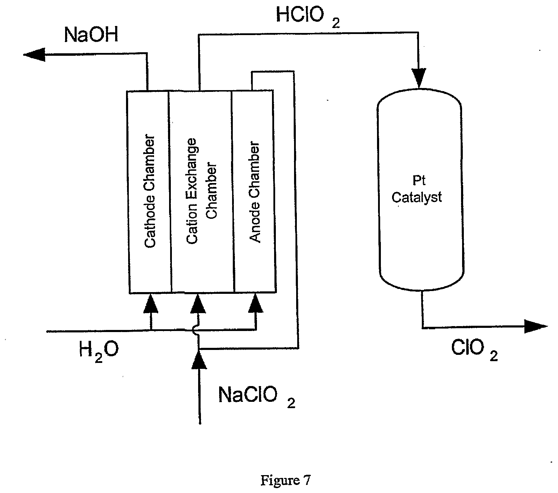

In an application for generating chlorine dioxide as shown schematically in Figure 7, the exemplary system 10 is configured with the three-compartment electrolytic reactor as previously described, wherein the central compartment outlet is in fluid communication with the catalytic reactor inlet. The three-compartment reactor preferably comprises a cation exchange membrane separating the anode and cathode compartments from the central compartment. Cation exchange material is preferably disposed in the central compartment. More preferably, cation exchange material is disposed in each compartment. A dilute aqueous feed solution of an alkali metal chlorite solution is preferably passed through the central compartment, wherein the alkali metal ions are exchanged with hydrogen ions in the cation exchange material to produce chlorous acid within the central compartment. Water preferably flows through the anode and cathode compartments. Preferably, the water is deionized. As a direct current is applied to the electrolytic reactor, the anode compartment eletrolyzes the water to generate, among others, hydrogen ions, whereas the cathode compartment electrolyzes the water to generate, among others, hydroxyl ions. The hydrogen ions generated in the anode compartment can diffuse across the cation exchange membrane into the central compartment to regenerate the cation exchange resin within the central compartment and/or to acidify the chlorite ions to produce chlorous acid. The chlorous acid effluent from the reactor is then fed to the catalytic reactor, wherein chlorous acid is catalytically oxidized by the catalytic material to produce chlorine dioxide.

The concentration of chlorous acid produced by the electrolytic reactor, e.g., 10, 100, is preferably less than about 6.0 grams per liter (g/L), with less than about 3 g/L more preferred and less than about 0.65 g/L even more preferred. Also preferred is a chlorous acid concentration greater than about 0.06 g/L, with greater than about 0.3 g/L more preferred and greater than about 0.5 g/L even more preferred. At concentrations greater than about 6.0 g/L, there is an increased risk of producing chlorine dioxide in the vapor phase as the chlorous acid solution is oxidized in the catalytic reactor 200, which undesirably can cause an explosion referred to by those skilled in the art as a "puff".

The applied current to the reactor 100 should be sufficient to reduce the pH of the resulting chlorous acid effluent solution to less than about 7. More preferably, the pH is reduced to about 1 to about 5, with a reduction of pH to about 2 to about 3 most preferred. The alkali metal ions from the alkali metal chlorite solution can diffuse through membrane 92 to the cathode compartment 76 and with the hydroxyl ions produce an alkali metal hydroxide effluent from the cathode compartment 76.

There are a number of variables that may be optimized during operation of the system 10. For example, a current density for the electrolytic reactors is preferably maintained at about 5 to about 100 milliAmps per square centimeter (mA/cm$^2$). More preferably, the current density is less than about 50 mA /cm$^2$, with less than about 35 mA/cm$^2$ even more preferred. Also preferred, are current densities greater than about 10 mA/cm$^2$, with greater than about 25

mA/cm$^2$ more preferred. The temperature at which the feed solutions (e.g., alkali metal chlorite solution, water, and the like solutions) is maintained can vary widely. Preferably, the temperature is less than about 50°C, with less than about 35°C more preferred and with less than about 25°C even more preferred. Also preferred is a temperature greater than about 2°C, with greater than about 5°C more preferred, and with greater than about 10°C even more preferred. In a preferred embodiment, the process is carried out at about ambient temperature.

In addition to temperature and current density, the space time, of the alkali metal chlorite solution with the cation exchange material, also referred to as contact time, is preferably less than about 20 minutes and more preferably, less than about 2 minutes. Also preferred is a space time greater than about 1 minute, with greater than about 0.1 minute more preferred. Similarly, the space time of the chlorous acid containing effluent with the catalytic material 206 is preferably less than about 20 minutes and more preferably, less than about 2 minutes. Also preferred is a space time greater than about 1minute, with greater than about 0.1 minute more preferred. As used herein, the term "space time" refers to the time necessary for a fluid to pass into and out of a chamber or compartment.

The velocity of the chlorine dioxide precursor solution through the electrolytic reactor and/or catalytic reactor is preferably less than about 100 centimeters/minute (cm/min), with less than about 70 cm/min more preferred and less than about 30 cm/min more preferred. Also preferred is a velocity greater than about 0.1 cm/min, with greater than about 10 cm/min more preferred and with greater than about 20 cm/min even more preferred. The pressure drop through the electrolytic reactor and/or catalytic reactor is preferably less than about 20 pounds per square inch (psi) and for most applications, with less than about 10 psi more preferred. Also preferred is a pressure drop greater than about 0.1 psi, and for most applications, with greater than about 1 psi more preferred. Further optimization for any of these process variables is well within the skill of those in the art in view of this disclosure.

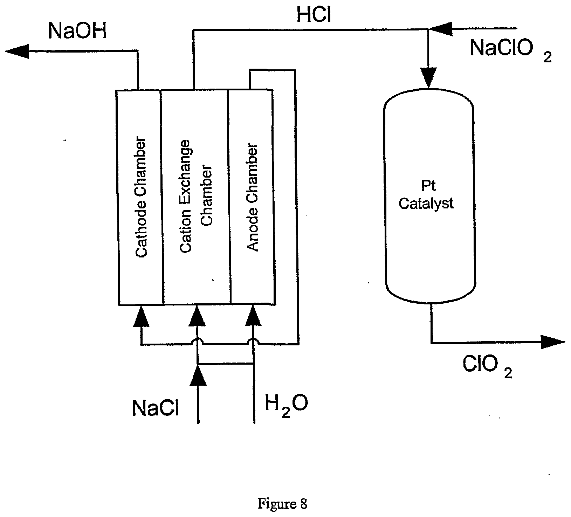

In accordance with another embodiment as shown schematically in Figure 8, an acid precursor solution, e.g., sodium chloride, can be introduced to the central compartment of the electrolytic reactor to produce a protic acid, e.g., hydrogen halide. As used herein, the term "protic acid" refers to a substance that produce hydrogen ions when added to water, e.g., a substance that dissociates or ionizes to produce hydrogen ions when added to water. The hydrogen halide can then be mixed with an alkali metal halite solution, such as sodium chlorite, and subsequently fed to the catalytic reactor, wherein contact of the mixed solution with the catalytic material produces chlorine dioxide. Preferably, water is fed to the anode compartment to produce an effluent that is then fed to the cathode compartment in series. In an alternative embodiment, the effluent from the anode compartment may be fed to the alkali metal halide influent entering the central compartment or the effluent from the central compartment. In this manner, the concentration of the hydrogen halide can be controlled as well as the current density applied to generate a particular concentration of hydrogen halide. Water may also be separately added to the alkali metal halide feedstream entering the central compartment so as to maintain a desired concentration level. While not wanting to be bound by theory, it is believed that upon mixing the hydrogen halide with the alkali metal halite a portion of the halite is converted to the corresponding halous acid. The halous acid and the mixed solution is then catalytically oxidized upon contact with the catalytic material to produce halogen oxide, e.g., chlorine dioxide.

The amounts of alkali metal halide utilized can be estimated based upon the amount of hydrogen halide required for converting a known concentration of alkali metal halite to halogen oxide. In providing this estimation, it is assumed that substantially all of the alkali metal halide will be converted to hydrogen halide upon flow through the central compartment and that the reaction is assumed to follow a first-order mechanism with respect to sodium chlorite. For example, in the case of chlorine dioxide production, the ratio of hydrogen chloride to sodium chlorite is preferably at a molar ratio of about 0.8 : 1 to about 3 : 1, and more preferably, is at a molar ratio of about 1 : 1. At higher acid concentrations (molar ratios greater than about 3 : 1), chlorine dioxide can potentially degrade to produce chloride ions. This degradation reaction can occur at a pH of less than 2.0.

The number of moles of acid presursor, e.g., sodium chloride ($C_{NaCl}$), is preferably equal to the number of moles of protic acid, e.g., hydrogen chloride ($C_{HCl}$), required for converting the halite ions to halogen dioxide. Once determined, this value is then divided by the current efficiency ($\eta$), which can be experimentally determined. The current efficiency is a function of many variables, including, but not limited to, concentration of the hydrogen generated within the anode compartment and the amount of sodium ions displaced in the central compartment. In this particular process, the current efficiency is preferably about 0.40 to about 0.95, and more preferably, is at a current efficiency of about 0.60 to about 0.85.

$$C_{NaCl} = \frac{C_{HCl}}{\eta}$$

Once the concentration of acid precursor has been estimated, the flow rate or applied current can be estimated using the formula as shown below:

$$\frac{Q}{I} = \frac{\eta}{C_{NaCl}\ z\, F}$$

wherein $\eta$ is current efficiency, I is the applied current, Q is the flow rate, z represents the charge number, and F is Faraday's Law constant. It should be noted that the optimal flow rate through the system will be dependent on the physical constraints of the different reactors since the flow rate in the electrolytic reactor will be the same as the flow rate in the catalytic reactor.

The disclosure is further illustrated by the following non-limiting Examples.

Example 1.

In this example, a platinum catalyst material was prepared. First, a platinum precursor solution was prepared by combining 2.6 grams tetramineplatinum (II) chloride, 44 milliliters (mls) of 91%, isopropyl alcohol, 3 mls of ammonia hydroxide, and 27 mls of deionized water. The platinum precursor solution (37 mls) was mixed with 300 mls of ceramic spheres and then baked at a temperature of about 550°C for about 30 minutes. The ceramic spheres were coated in this manner a total of two times. The ceramic spheres were obtained from Kinetico Company under the trade name Macrolite ML 2040 that had been previously backwashed with deionized water and air dried overnight. The resulting catalyst material had an effective particle size of about 0.60 millimeter.

Example 2.

In this Example, a system for generating chlorine dioxide was configured as described in Figure 1.

The electrolytic reactor was configured as shown and described in Figure 4. Each compartment employed a length of 25.4 centimeters (cm) with a width of 5.08 cm. The thickness of the central compartment was 1.27 cm and the thicknesses of the electrode compartments were 0.64 cm. The electrode and central compartments of the electrolytic reactor contained SK116 cation exchange resin commercially available from Mitsubishi Chemical. A transverse DC electric field was supplied by an external power supply to the electrodes. The effluent from the anode compartment was coupled to the inlet of the central compartment, thereby diluting a 25-weight percent sodium chlorite feed solution such that the final concentration of sodium chlorite was about 1,000 mg/L as it entered the central compartment. The temperature of the feed solution was held constant at about 20°C.

The catalytic reactor was configured as shown in Figure 6 and had a diameter of 2.62 cm and length of 60.96 cm. The catalytic reactor was filled with about 300 milliliters of the platinum catalyst prepared in accordance with Example 1. The inlet conduit of the catalytic reactor was coupled to the central compartment outlet of the electrolytic reactor. Thus, the catalytic reactor was configured to receive an effluent from the electrolytic reactor containing chlorous acid.

Softened water was passed upwardly through the cathode compartments of the electrolytic reactor at a flow rate of about 50 mL/min and upwardly through the anode compartment at a flow rate of about 150 mL/min. While passing the solutions through the compartments of the reactor, a controlled current of about 5.0 amps was applied to the anode and cathode to produce an effluent containing chlorous acid in the central compartment. The system was operated continuously for a period of 100 hours. Cell voltage, system pressure, chlorine dioxide flow rate, sodium chlorite pump rate, chlorine dioxide concentration and pH of the effluent were periodically monitored.

A Direct Reading Spectrophotometer, Model No. DR/2010, was used to measure the chlorine dioxide concentration (mg/L) in the solution exiting the catalytic reactor using Hach Company Method 8138. Measurement of the yield provides a standard for evaluating actual performance of the system and can be determined in accordance with the following mathematical relationship:

$$\%Yield = \frac{actual}{theoretical} \times 100$$

wherein the actual yield is determined from the amount of chlorine dioxide generated, and wherein the theoretical yield is calculated by the amount of chlorine dioxide that could be generated from the sodium chlorite solution. The theoretical yield can be calculated as follows:

$$\%TheoreticalYield = \frac{[ClO_2]_{product}}{\theta[NaClO_2]_{feed}\left[\dfrac{90.5}{67.5}\right]} \times 100$$

wherein the term (90.5/67.5) is the ratio of the equivalent weight of the sodium chlorite to chlorine dioxide. The symbol "θ" represents the stoichiometric ratio between the chlorine dioxide product and sodium chlorite reactant, which can vary from 0.8 to 1.0 depending on the reactants used and the stoichiometry of the reaction.

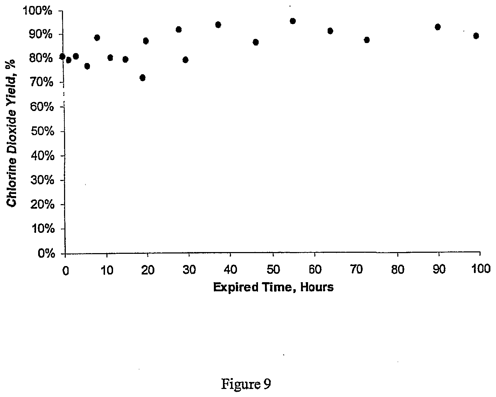

Figure 9 graphically depicts the conversion efficiency as a function of time for the system. The conversion of chlorite solution to a chlorine dioxide solution was at about the maximum theoretical yield. Increased conversion efficiencies over a prolonged period of time are a significant commercial advantage since it reduces the maintenance and operating costs of these reactors significantly. It is also noted that the effluent from the electrolytic reactor was measured for chlorine dioxide and found to be below the detection limit of the spectrophotometer. This was the result of low concentration of sodium chlorite, low current density, and high velocity.

Example 3.

In this example, the system as schematically illustrated in Figure 5 was employed, wherein a sodium chloride solution was passed upwardly through the central compartment of the electrolytic reactor at a flow rate of about 150 mL/min. Softened water was passed upwardly through the anode compartment and its effluent was then passed upwardly through the cathode compartment e.g., in-series, at a flow rate of about 50 mL/min. While passing the solutions through the compartments, a controlled DC current of about 5.0 amps was applied to the anode and cathode. A 25-wt % of sodium chlorite solution was added to the HCl containing effluent discharged from the central compartment such that the final concentration of sodium chlorite was about 1,000 mg/L. The acidified and diluted sodium chlorite solution was then passed through a fixed-bed catalytic reactor to produce a chlorine dioxide effluent from the outlet of the catalytic reactor. The operating parameters and results are shown in Table 1 as follows.

Table 1.

| | |
|---|---|
| $ClO_2$ Concentration, ppm | 597 |
| Flow Rate, mL/min | 150 |
| Temperature, °C | 22.5 |
| pH | 2,78 |
| Pressure Drop, psi | 15.0 |
| Voltage, V | 28.0 |
| Current, Amps | 5.14 |
| Reaction Yield, % | 93.5 % |

The data was obtained after a steady-state condition had been established and clearly shows that the system efficiently produced a chlorine dioxide effluent

**Claims**

1. A process for producing chlorine dioxide from an alkali metal chloride solution, the process comprising:

applying a current to an electrolytic reactor (70), wherein the electrolytic reactor (70) includes an anode compartment (72) comprising an anode (32), a cathode compartment (76) comprising a cathode (34), and a central compartment (74) positioned between the anode and cathode compartments (72, 76), wherein the central compartment (74) comprises a cation exchange material (40) and is separated from the cathode compartment (76) with a cation exchange membrane (92);
flowing water ($H_2O$) into the anode and cathode compartments (72, 76);
feeding an acid precursor solution to the central compartment (74);
exchanging alkali metal ions from the acid precursor with hydrogen ions to produce a protic acid effluent in the central compartment (74);
diluting an alkali metal chlorite solution with the protic acid effluent;
feeding the diluted alkali metal chlorite to a catalytic reactor (200); and
contacting the diluted alkali metal chlorite with a catalytic material (206) in the catalytic reactor (200) to produce chlorine dioxide.

2. The process according to claim 1, wherein the acid precursor solution comprises an alkali metal compound selected from the group consisting of sulfates, sulfites, nitrates, halides, nitrites, phosphates, and phosphates.

3. The process according to any preceding claim, wherein the acid precursor solution comprises an alkali metal chlorite solution, and wherein the effluent containing the protic acid comprises hydrogen chloride.

**Patentansprüche**

1. Verfahren zur Herstellung von Chlordioxid aus einer AlkalimetallchloridLösung, wobei das Verfahren umfasst:

Anlegen eines Stroms an einen elektrolytischen Reaktor (70), wobei der elektrolytische Reaktor (70) einschließt: eine Anodenkammer (72), umfassend eine Anode (32), eine Kathodenkammer (76), umfassend eine Kathode (34), sowie eine zentrale Kammer (74), angeordnet zwischen der Anoden- und der Kathodenkammer (72, 76), wobei die zentrale Kammer (74) ein Kationenaustauschmaterial (40) umfasst und von der Kathodenkammer (76) getrennt ist durch eine Kationenaustauschmembran (92);
Einströmen von Wasser ($H_2O$) in die Anoden- und Kathodenkammer (72, 76);
Einspeisen einer Säurevorläufer-Lösung in die zentrale Kammer (74);
Austauschen von Alkalimetall-Ionen aus dem Säurevorläufer durch Wasserstoff-Ionen, um einen protischen, sauren Abfluss in die zentrale Kammer (74) zu erzeugen;
Verdünnen einer Alkalimetallchlorit-Lösung mit dem protischen, sauren Abfluss;
Einspeisen der verdünnten Alkalimetallchlorit-Lösung in einen katalytischen Reaktor (200); und
Inkontaktbringen des verdünnten Alkalimetallchlorits mit einem katalytischen Material (206) im katalytischen Reaktor (200), um Chlordioxid herzustellen.

2. Verfahren nach Anspruch 1, wobei die Säurevorläufer-Lösung eine Alkalimetall-Verbindung umfasst, ausgewählt aus der Gruppe bestehend aus Sulfaten, Sulfiten, Nitraten, Halogeniden, Nitriten und Phosphaten.

3. Verfahren nach einem der vorhergehenden Ansprüche, wobei die Säurevorläufer-Lösung eine Alkalimetallchlorit-Lösung umfasst, und wobei der Abfluss, welcher die protische Säure enthält, Chlorwasserstoff umfasst.

**Revendications**

1. Procédé pour produire du dioxyde de chlore à partir d'une solution de chlorure de métal alcalin, le procédé comprenant :

l'application d'un courant à un réacteur électrolytique (70), dans lequel le réacteur électrolytique (70) comporte un compartiment anodique (72) comprenant une anode (32), un compartiment cathodique (76) comprenant une cathode (34), et un compartiment central (74) placé entre les compartiments anodique et cathodique (72, 76), dans lequel le compartiment central (74) comprend un matériau échangeur de cations (40) et est séparé du compartiment cathodique (76) par une membrane échangeuse de cations (92) ;
l'écoulement d'eau ($H_2O$) dans les compartiments anodique et cathodique (72, 76) ;
l'introduction d'une solution de précurseur d'acide dans le compartiment central (74) ;
l'échange d'ions de métal alcalin issus du précurseur d'acide avec des ions hydrogène pour produire un effluent d'acide protique dans le compartiment central (74) ;
la dilution d'une solution de chlorite de métal alcalin avec l'effluent d'acide protique ;
l'introduction du chlorite de métal alcalin dilué dans un réacteur catalytique (200) ; et
la mise en contact du chlorite de métal alcalin dilué avec un matériau catalytique (206) dans le réacteur catalytique (200) pour produire du dioxyde de chlore.

2. Procédé selon la revendication 1, dans lequel la solution de précurseur d'acide comprend un composé de métal alcalin choisi dans le groupe constitué des sulfates, des sulfites, des nitrates, des halogénures, des nitrites, des phosphates, et des phosphates.

3. Procédé selon l'une quelconque des revendications précédentes, dans lequel la solution de précurseur d'acide comprend une solution de chlorite de métal alcalin, et dans lequel l'effluent contenant l'acide protique comprend du chlorure d'hydrogène.

EP 1 540 036 B1

Fig. 1

Fig. 2

14

Fig. 3

Fig. 4

EP 1 540 036 B1

MATCH TO FIG. 5B

106

86

80

90

32

102

84

78

100

Fig. 5A

16

*Fig. 5B*

*Fig. 6*

Figure 7

NaClO$_2$

HCl

Pt Catalyst

ClO$_2$

Anode Chamber

Cation Exchange Chamber

Cathode Chamber

H$_2$O

NaCl

NaOH

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5419816 A, Sampson
- US 5609742 A, Sampson
- US 5008096 A
- US 5106465 A
- US 6024850 A
- US 5705050 A
- US 4725390 A
- US 4632876 A